# EUROPEAN PATENT APPLICATION

(11) **EP 4 276 594 A1**
(43) Date of publication of application: **15.11.2023**
(21) Application number: 23173074.8
(22) Date of filing: 12.05.2023
(51) Int. Cl.: G06F 3/0481, G06F 3/04817

(54) **A METHOD FOR CONFIGURING A MULTIMEDIA ENTERTAINMENT SYSTEM**

(30) Priority: 12.05.2022 GB 202206937
(71) Applicant: Sony Interactive Entertainment Europe Limited, London W1F 7LP (GB)
(72) Inventor: SANDERS, Ashley, London, W1F 7LP (GB); EVERITT, Geoffrey, London, W1F 7LP (GB); NEDELCU, Radu-Andrei, London, W1F 7LP (GB)
(74) Representative: Gill Jennings & Every LLP

(57) **Abstract**

A method for configuring a start-up display screen of a multimedia entertainment system, the method comprising: storing time related reference usage data of each application from a plurality of applications configured to run on the multimedia entertainment system; comparing the reference usage data of each application with a current system start up time to identify at least one identified application based on the reference data; and configuring the start-up display screen based on said identified at least one application.

## Description

### FIELD OF THE INVENTION

The present invention relates to a method for configuring a start-up display screen of a multimedia entertainment system.

### BACKGROUND

Multimedia entertainment systems are becoming increasingly popular and can now be found in most households nowadays. Appealing to users of all ages and interests, multimedia entertainment systems have become the perfect entertainment means amongst families and flat sharers alike.

Many multimedia entertainment systems have a start-up screen which allows a user to quickly swap between their most recently played games or applications. By displaying the corresponding application icons for each game, the user can select a game to play without scrolling through a library of games.

However, in practice, it is often still required of the user to scroll through the library since the most recently played games may not include what the current player enjoys playing. Many households share a multimedia entertainment system between both children and adults who naturally have differing interests in games, resulting in an assortment of recently played games that have been accessed by different family members. In this way, the current player may need to scroll through the full library of games and applications to find what they are looking for.

Not only will the interests of each family member differ from one another, but the interests of the individual may vary. As such, the individual user can encounter the same problems mentioned above when trying to locate the game or application they want to play at a given session. Such delays in locating a desired game make this a cumbersome process for the user. Even once the desired game is located, the user can experience further delays when waiting for the resources of the game to load and when manually configuring the system settings to fit their preferences.

In this way, improvements can be made to efficiency and accessibility of prior art start-up display screens due to the complexities that come with launching a game to fit the user's preferences.

### SUMMARY OF INVENTION

It is an object of the present invention to provide a start-up display screen which makes progress in solving some of the problems of prior art systems identified above.

Easy and time-efficient access to games or applications can improve the multimedia entertainment experience for a player, for example, by displaying the games or applications on a start-up display screen that the player is predicted to play based on their previous gaming behaviour. The terms "user" and "player", and related terms such as "application" and "game", are used interchangeably herein. It will be apparent that a player is a user of the multimedia entertainment system and is not restricted to using video game applications with the system.

According to a first aspect, there is provided a method for configuring a start-up display screen of a multimedia entertainment system, the method comprising: storing time related reference usage data of each application from a plurality of applications configured to run on the multimedia entertainment system; comparing the reference usage data of each application with a current system start up time to identify at least one identified application based on the reference data; and configuring the start-up display screen based on said identified at least one used application.

The above-described method may result in a customised start-up display screen in which a player can easily access the identified game or application that they are likely to want to play based on the previous behaviour exhibited by the single player or a plurality of players on the multimedia entertainment system. Such a method enables priority to be given to games and applications that are more likely to be played by the current player at a given time on the multimedia entertainment system. This further provides a variety of beneficial processing and efficiency effects which are discussed below.

The method may further comprise loading at least a portion of resources of the at least one identified application.

The term "portion of resources" refers to any number of assets or levels within a game or application. Resources of an application may take a long time to load once the application has been selected to launch by a player from the start-up display screen. Advantageously, by loading at least a portion of resources of the identified application before the application has been launched by a user, there is a reduction in the time a user has to wait for all the resources of a game to load once they have selected an application to launch. In some examples, the system may continuously load portions of resources based on the reference data analysed. For example, the system may always have one or more resources of the 'most likely game' pre-loaded so that the game (or other media) is ready to play when the user starts the system up. This may be done in one or more background processes, for example when the system is in sleep or hibernation mode and not fully started up. In some examples the system may pre-load a plurality of resources from a plurality of levels, for example the three most likely games or media.

The method may further comprise configuring at least one system setting of the multimedia entertainment system based on the at least one identified application.

The term "system setting" refers to an adjustable operating parameter which can be adjusted based on user preferences. For example, these settings may include control configurations, audio settings and colour levels. For the same reasons identified above, configuring the system settings reduces the wait time experienced by a player once they have selected an application from the start-up screen.

Game resources and system settings which are loaded in this way before the application is launched may be referred to as pre-loaded. That is, the system can pre-load them in one or more background processes before the application is explicitly started by the user. This may be before the system is started up (for example, when the system is in a sleep or hibernation mode) or after the system has been started but before an application is launched. Not only are these preloading features convenient and time-saving for the user, but they also minimise the complexities associated with launching and setting up a game for play, making the game more accessible for users.

Optionally, icons associated with multiple identified applications are displayed in an ordered ranking of the multiple identified applications.

By displaying icons associated with the identified at least one application the user is provided with an easy and accessible means of selecting and launching the application they to want to use. Icons are often universally recognisable, which makes it clear to the user which application will be launched if they select the given icons. This improves the accessibility of the multimedia entertainment systems to children and people with disabilities.

Optionally, the step of identifying at least one identified application is further based on at least one of: network connectivity, and an online status of secondary users.

The term "network connectivity" is used to refer to the connectivity of the entertainment system with a network or the internet. The network connectivity of the system may be defined as on or off only, or it may refer to the network strength of the device. Including the network connectivity in the step of identifying at least one application may result in only the games that the user is able to play at the current start-up time being displayed on the start-up display screen. In this way, games requiring strong internet connection may not be identified if the player cannot access the internet at the current start-up time. Additionally, the behaviour of the user may vary depending on the online status of a secondary user. For example, the player may only play a certain game when a secondary user is online or offline. Both these features add an additional level of customisation to the start-up display screen, saving the user time when deciding which application they want to launch and improving the user experience when using the application. The identifying step being based on network connectivity and/or an online status means that these statuses are part of the reference usage data and the corresponding status of the system at the current system start up time.

Optionally, the step of identifying at least one identified application comprises obtaining a ranking of the plurality of applications, the at least one identified application being identified from the highest ranking applications

The term "obtaining a ranking" refers to establishing a relationship between the plurality of applications. The at least one application being identified from the highest ranking applications increases the likelihood that the start-up display screen will be configured based on at least one application that the current user is likely to want to launch at the current system start-up time.

Optionally, the at least one identified application is the highest ranking application.

Similarly to the above, the at least one application being the highest ranking application increases the likelihood that the identified application is an application that the user wants to launch at the current start-up time. The highest ranking application may be multiple identified applications, for example where multiple identified applications are determined to be just as likely for the user to launch.

Optionally, multiple identified applications are identified and at least a portion of resources of the multiple identified applications are loaded based on the ranking position of each of the multiple identified applications.

Further, the portion of the resources loaded for the multiple identified applications may be proportional to a ranking position of each of the multiple identified applications.

Optionally, multiple identified applications are identified and the at least one of the system settings may be configured based on the ranking position of each of the multiple identified applications.

Since the highest ranking applications is likely to be the applications that the user wants to launch at the current start-up time, loading the application proportionally based on its ranking position increases the likelihood that the application the user is looking to launch will have a portion of the resources loaded, thereby further saving the user time if they then select an identified application to be launched. The proportional loading further allows multiple applications to be at least partially pre-loaded before they are launched, without unnecessarily loading a large amount of resources for an application which is unlikely to be launched. The same advantages apply for configuring the system settings.

Optionally, icons associated with the multiple identified applications are displayed in an ordered ranking of the multiple identified applications.

Presenting icons associated with each application in order of their ranking allows the user to scroll through the highest ranking applications. This is particularly useful when the user tends to and is therefore likely to switches between multiple different games at the current start-up time, so there is easy access provided to all these different games and fewer processing resources are likely to be used when selecting a game.

Optionally, the step of identifying at least one identified application comprises obtaining a numerical score corresponding to the at least one identified application, and wherein the numerical score is representative of the likelihood of the at least one application being opened at the current system start up time. Alternatively, the numerical score may also be representative of how desirable the at least one application currently is.

The numerical score may be calculated continuously or at regular intervals, and may be done in a background process such that when the system is in a 'sleep' mode, the scores may still be calculated before the system is fully switched on.

The current system start up time may comprise at least one of: a time of day, and a day of the week. The current start-up time comprising a time of day may result in the identified at least one application being the application or applications that the user is likely to play at the given time of day. Additionally, if the current start up time also comprises the day of the week, then the identified at least one application may be the application or applications that the user is likely to play at that time on that day of the week. The start-up display screen is therefore customised based on the player's habits during the day and/or the week.

In a second aspect of the invention, there is provided a multimedia entertainment system configured to perform the method of the first aspect.

In some examples of the second aspect, the multimedia entertainment system may comprise a data unit configured to store time related reference usage data of each application from a plurality of applications configured to run on the multimedia entertainment system, a comparison unit configured to compare the reference usage data of each application with a current system start up time to identify at least one identified application based on the reference data, and an arrangement unit configured to arrange the start-up display screen based on said identified at least one application.

It will be appreciated that any one or more of the features described herein with respect to the first aspect of the disclosure may be adapted and similarly applied to the second aspect.

### BRIEF DESCRIPTION OF DRAWINGS

Figure 1 is a schematic diagram of a multimedia entertainment system in which a method according to the invention may be implemented;
Figure 2 is a flow chart schematically illustrating steps of a method according to the present invention;
Figure 3 is a schematic diagram of an exemplary start-up display screen; and
Figure 4 is a schematic diagram of another exemplary start-display screen.

### DETAILED DESCRIPTION

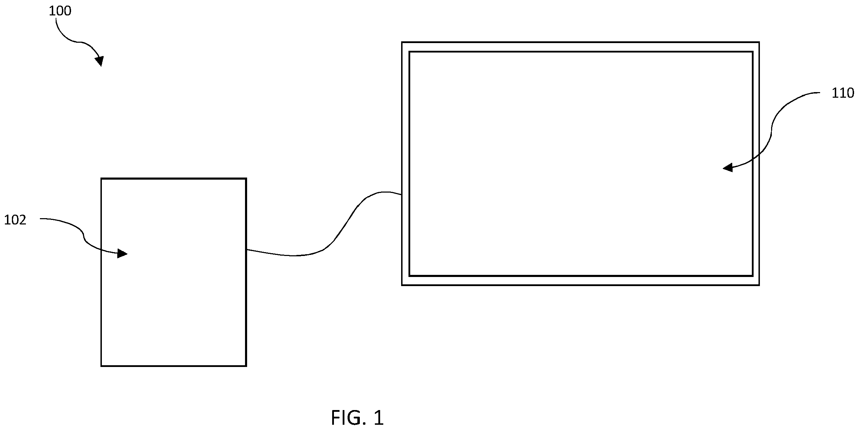

Figure 1 is a schematic diagram of a multimedia entertainment system 100 in which a method according to the present invention may be implemented. As shown in Figure 1, the multimedia entertainment system 100 may comprise a display screen 110 coupled to a computer 102 via a wired or wireless connection.

The display screen 110 may, for example, be a television, a home cinema system, or a projector.

The computer 102, in one embodiment, may be a gaming system console which allows players to play games or access applications and interface with the games and applications through a peripheral device (not shown in Figure 1). Alternatively, the computer 102 may be a multimedia streaming receiver, a DVD player or other multimedia source. The terms "application" and "game" are used interchangeably throughout the description to mean a program designed for a particular purpose wherein the program may be any one of: a video game, a video streaming application, a social media platform, an information manager or alike.

The peripheral device may be a handheld controller, a companion touchscreen interface, an audio headset or audio-visual headset (e.g. VR or AR headsets), a mobile phone, a wearable device, or any device allowing a user to communicate with the computer 102.

In some implementations, the display screen 110 and the computer 102 may be combined in a single device.

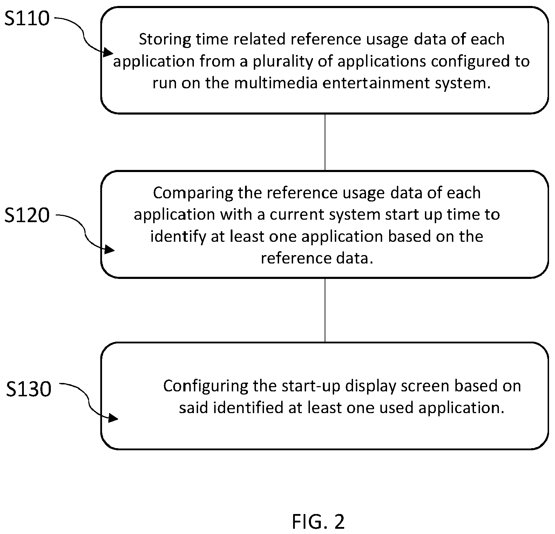

Figure 2 is a flow chart schematically illustrating steps of a method according to the present invention.

At step S110, the computer 102 stores time related reference usage data for each application from a plurality of applications configured to run on the multimedia entertainment system. The time related reference usage data may, for example, comprise information relating to each instance of a user launching or using a given application on the multimedia entertainment system 100. The information may comprise at least one of: the date, the time, the day of the week and the month of the year that the application was launched or run. The information may also comprise location information - for example the geographical location at which the computer is being operated to run or stream the application.

The plurality of applications configured to run on the multimedia entertainment system 100 may be any combination of applications. The plurality of applications may include, for example, video streaming applications, music playback applications, internet browsing applications, video game applications and the like.

At S120, the computer 102 compares the reference usage data of each application with a current system start-up time to identify at least one application based on the reference data. The current system start-up time may comprise at least one of: the current date, the current time, the day of the week and the month of the year. In this way, the reference usage data corresponds with the start-up time such that they are comparable and can be used to identify at least one application that the user is likely to want to launch at the current system start-up time. The computer 102 identifies at least one application based on the reference data.

The at least one identified application will often be referred to as a single application for ease of reference throughout the description, however it will be apparent that this is not intended to limit the scope of the invention and the at least one identified application may also be multiple identified applications.

Though the method refers to a current system start-up time, this does not mean the method may only be performed when the system is, for example, initiated or powered on. The method may repeat at intervals while the system is powered on and these intervals can be regular or irregular. For example, the method may be repeated every 30 minutes, one hour, or two hours. Alternatively, the method may be initialized when the user performs a given operation on the multimedia entertainment system, such as returning to a home page. The regular intervals can also be used in combination with the irregular intervals.

An aim of the present invention is to configure the start-up display for quick and easy access of games and applications that the user is likely to want to play at the current start-up time. Therefore, to improve the likelihood the identified application is one that the player wants to use, the step of identifying may be additionally based on other variable factors outlined below.

Factors such as network connectivity and an online status of a secondary user may affect the likelihood of the user wanting to launch a given application. In this way, the step of identifying at least one application may be further be based on the on these factors so that the identifying at least one application has an increased chance of being an application that the player wants to play at the current start-up time. When these other variable factors are used to identify the at least one application, the reference usage data includes reference usage data of a given factor, and this is compared against the current status of the given factor. For example, if the other variable factor considered is network connectivity then the reference usage data includes network connectivity reference usage data, and this is compared with the network connectivity status of the system at the current system start-up time.

The network connectivity of the multimedia entertainment system 100 may be based on if the computer 102 is connected to a network or the internet and/or the strength of the signal of the connection. For example, if internet is required for an application to be played but the computer 102 is currently offline, said application may not be identified by the computer 102 at S120. The online status of a secondary user may be based on if a secondary user or plurality of secondary users are connected to the internet at the current system start-up time or if they are likely to be connected to the internet at the current system start-up time, based on secondary user reference usage data. For example, if a user only plays a game when a secondary user is online, the game is unlikely to be identified at S120 when the secondary user is offline.

One method of identifying the at least one application is to consider reference usage data for a given application and comparing it against the current system start up time and/or the current system status in order to obtain a numerical score.

Preferably, all the reference usage data for a given application is considered in order to obtain the most accurate numerical score for that application. The numerical score may be representative of the likelihood of a user wishing to open a particular application. The score may also be representative of how desirable the application currently is. The score may be obtained for example through a neural network or machine learning model. The numerical score may be, or comprise, a probability score for that given application. The probability score represents the likelihood of a user launching the given application at the current system start up time (and optionally takes into account the current system status). Each application available to the computer 102 may have an associated probability score. Therefore the method may comprise a step of calculating a probability score for one or more of the plurality of applications, based at least in part on the reference usage data (which may include factors other than time such as the network data described herein). The probability score may be calculated continuously or at regular intervals. The calculation may be done in a background process such that when the computer is in a 'sleep' mode, the scores may still be calculated before the computer is fully switched on. It will be apparent to the skilled person that other methods of identifying the at least one application are available and the present invention is not limited to a specific method. The step of identifying the at least one application may use machine learning to further improve the accuracy of the identifying the at least one application.

The step of identifying at least one application may be further be based on obtaining a ranking of the plurality of applications; the at least one application being identified from the highest ranking applications. The ranking establishes a relationship between the plurality of applications, with some applications being ranked higher than others. The at least one identified application may be one application with highest ranking or may be a plurality of applications with the highest rankings.

It will be apparent that the ranking can be performed using various techniques and this may depend on the method(s) used to identify the at least one application. Continuing the above example of using probability scores, the plurality of applications can be ranked according to the probability score associated with each application (e.g. in a descending order). The ranking may be obtained manually. Preferably, the ranking may be obtained using automated techniques.

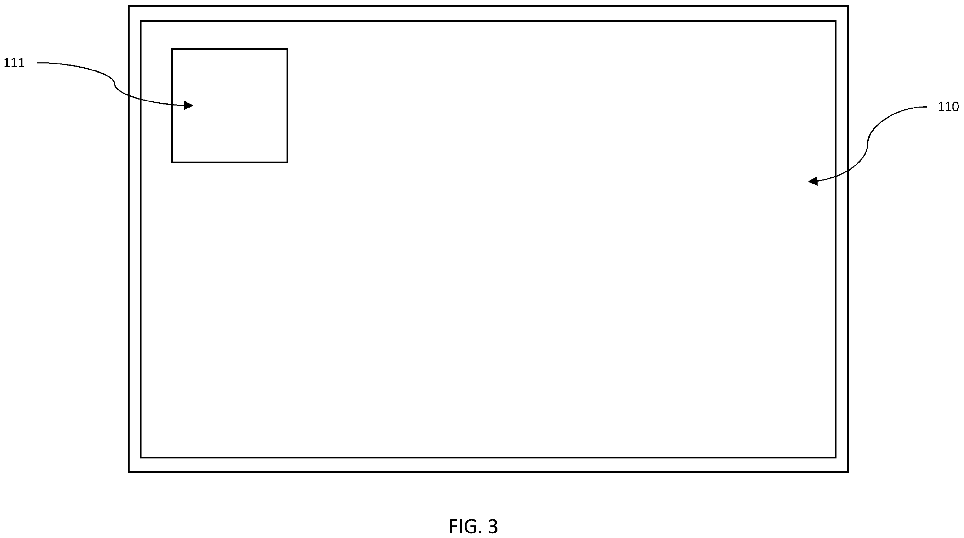

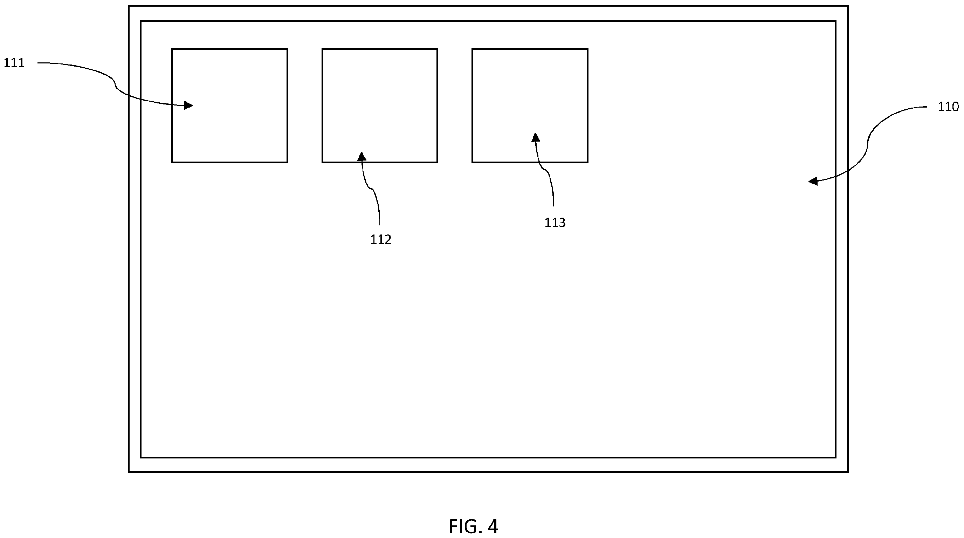

At step S130, the computer 102 configures the start-up display screen based on said identified at least one used application. Exemplary start-up display screen configurations are described in detail below in relation to Figures 3 and 4.

The method, carried out by the computer 102, may further comprise additional steps of at least one of: loading at least a portion of resources of the identified at least one application, and configuring at least one of the system settings of the multimedia entertainment system 100. The at least a portion of resources may include any asset included in the game and/or any level included in the game. In some examples, the assets of a game may include maps, textures or characters found in any of the levels of the game. In an example where the identified application is a video streaming application, the portion of resources loaded may be video and audio data of a video the user watched part of when the video streaming application was previously run. The system settings may include control configurations, audio settings, colour levels, brightness settings and any other system preference that may be chosen by the player. For example, the reference usage data may include that a user regularly activates a colour blind accessibility mode when using the multimedia entertainment system at a given time, and so when the current system start up time matches that given time the multimedia entertainment system can automatically activate the colour blind accessibility mode without input from the user (or prompt the activation of the mode to reduce the number of inputs required from the user). Such a scenario is easily foreseeable where multiple different users regularly use a single multimedia entertainment system. In some cases, for example when the computer 102 is operated to stream from a library of applications stored on or run from a cloud server, one or more steps of the method may be carried out by the cloud server on/from which the applications are stored/run. For example, the calculation of probability scores may be done from the cloud server and results transmitted to the local computer 102.

The identified at least one application may be partially loaded (i.e. loading only some of the resources included in the application) or fully loaded (i.e. loading all of the resources included in the application). When multiple applications are identified, all of the multiple identified applications may be fully loaded or they may all be partially loaded, with the same portion of resources loaded for each. Alternatively, the portion of resources loaded for each of the identified applications may vary.

In one embodiment, the portion of resources loaded for each of the more than one application is based on the ranking position of the application. For example, an application with the highest ranking may be fully loaded, while the other identified applications may be partially loaded. The portion of resources loaded for each of the identified more than one applications may be proportional to their ranking position. For example, the highest ranking application may have the highest portion of resources loaded, the second highest ranking application may have the second highest portion of resources loaded, the third highest ranking application may have the third highest portion of resources loaded and so on.

In an example of the method which uses a probability score to identify the at least one identified application, the portion of resources loaded and/or of system settings configured is proportional to the probability score of the identified application.

Similarly, the at least one of the system settings may be configured in any of the above-described ways based on the ranking of the identified more than one applications.

Figure 3 schematically illustrates a start-up display screen 110 configured according to one embodiment of the present invention. Figure 3 shows an exemplary resulting configuration of method steps described in detail above with relation to Figure 2.

The configuring of the start-up display screen may comprise displaying an icon 111 associated with the identified at least one application. The icon may be displayed at any location on the display screen 110, for example, in the top left hand corner, as shown in Figure 2. In some examples, icons associated with any other applications from the plurality of applications may also be displayed on the display screen 110. The icon 111 associated with the identified at least one application may be positioned proximal to an icon associated with the application from the plurality of applications that was previously launched on the entertainment system 100, or it may be displayed proximal to icons associated with applications understood to be in a similar genre to the at least one identified application. The genres may include action games, sports games, adventure games, children's games or any other genre of game. The user may be able to select an icon from the start-up display screen to manually launch the associated application, for example using the peripheral device.

The display screen 110 may display other information associated with the identified at least one application. For example at least one of the following features may additionally be outputted on the display screen 110: information about the application, images of the application, a video trailer of the application, an audio soundtrack or noises associated with the application. Additionally, or alternatively, messages and/or time stamps (not shown in Figure 2) may also be displayed on the display screen 110. An example message may be "You often play this game at 10:00pm", however, any message relating or about to the application and/or a time may be displayed, preferably proximal to the icon associated with the application. The current start-up time may be displayed on the display screen 110. Any of the above mentioned features may be present at any given time on the start-up display screen 110 or may only appear when the user interacts with the applications using the peripheral device. In some examples where a cursor or similar selection method is used by the computer to select an application, when the computer is started up, one or more of the identified applications may be highlighted or pre-selected by the cursor such that the user simply needs to confirm the selection to launch into the application. In other examples, one of the identified applications may simply launch as soon as the computer is started up without displaying the display screen 110.

In an embodiment when more than one application is identified, the start-up display screen may be configured based on the multiple identified applications. The icons associated with the identified applications may all be displayed at various locations on the display screen 110. In some embodiments, the icons may be in rows or columns. In one embodiment, the icons associated with each of the identified applications may be in displayed in an ordered ranking. The ordered ranking may comprise of displaying the icons in a row or column arranged from highest ranking to lowest ranking so that the applications are displayed to the user in order of likelihood that the user wishes to launch the application. Figure 4 schematically illustrates a start-up display screen 110 where three applications have been identified and ranked, and icons associated with the identified applications are arranged in a row according to the ranking. The first icon 111 is associated with an identified application with highest ranking, the second icon 112 is associated with an identified application having a second highest ranking, and the third icon 113 is associated with an identified application having a third highest ranking. Although the example of Figure 4 illustrates a single horizontal row of icons, the applications may be displayed to the user in any number of different configurations. For example the icons may be arranged in a vertical column, or in a plurality of rows and/or columns. In other examples icons may be arranged in 2D or 3D space. The icons may be arranged in a wholly or partially randomised scatter. Where different arrangements are employed, the most likely applications may be arranged, sized or highlighted in some way which indicates its recognition as the most likely application. For example, the most likely icon may be the largest size or at the location at which it is easiest distinguished from others. Where numerical or probability scores are utilised as described herein, the arrangement may be configured in proportion or accordance with the score associated with each application - e.g., the largest score application having the largest icon (or most accessible placement on the screen) and the lowest score application having the smallest icon (or least accessible placement on the screen)

As will be appreciated from the above, the present invention can significantly improve user interaction with a multimedia entertainment system during start up as well as improving the speed and efficiency of the system start up process.

## Claims

1. A method for configuring a start-up display screen of a multimedia entertainment system, the method comprising:
storing time related reference usage data of each application from a plurality of applications configured to run on the multimedia entertainment system;
comparing the reference usage data of each application with a current system start up time to identify at least one identified application based on the reference data; and
configuring the start-up display screen based on said identified at least one application.

2. The method according to claim 1, further comprising loading at least a portion of resources of the at least one identified application.

3. The method according to claim 1 or 2, further comprising configuring at least one system setting of the multimedia entertainment system based on the at least one identified application.

4. The method according to any preceding claim, wherein configuring the start-up display screen comprises displaying icons associated with the at least one identified application

5. The method according to any preceding claim, wherein the step of identifying at least one identified application is further based on at least one of: network connectivity, and an online status of secondary users.

6. The method according to any preceding claim, wherein the step of identifying at least one identified application comprises obtaining a ranking of the plurality of applications, the at least one identified application being identified from the highest ranking applications.

7. The method according to claim 6, wherein said at least one identified application is the highest ranking application.

8. The method according to claim 2 and claim 6 or claim 7, wherein multiple identified applications are identified and at least a portion of resources of the multiple identified applications are loaded based on the ranking position of each of the multiple identified applications.

9. The method according to claim 8, wherein the portion of resources loaded for the multiple identified applications is proportional to a ranking position of each of the multiple identified applications.

10. The method according to claim 3 and any of claims 6 to 9, wherein multiple identified applications are identified and the at least one of the system settings is configured based on the ranking position of each of the multiple identified applications.

11. The method according to any of claims 6 to 10, wherein icons associated with the multiple identified applications are displayed in an ordered ranking of the multiple identified applications.

12. The method according to any preceding claim, wherein the step of identifying at least one identified application comprises obtaining a numerical score corresponding to the at least one identified application, and wherein the numerical score is representative of the likelihood of the at least one application being opened at the current system start up time.

13. The method according to any preceding claim, wherein the current system start up time comprises at least one of: a time of day, and a day of the week.

14. A multimedia entertainment system configured to perform the method of any preceding claim.

15. The system of claim 14, comprising:
a data unit configured to store time related reference usage data of each application from a plurality of applications configured to run on the multimedia entertainment system;
a comparison unit configured to compare the reference usage data of each application with a current system start up time to identify at least one identified application based on the reference data; and
an arrangement unit configured to arrange the start-up display screen based on said identified at least one application.
